## Europäisches Patentamt
## European Patent Office
## Office européen des brevets

(19)

(11) Numéro de publication: **0 029 757**
**B1**

(12)

# FASCICULE DE BREVET EUROPEEN

(45) Date de publication du fascicule du brevet: **13.04.83**

(51) Int. Cl.³: **B 62 D 1/18,** G 05 G 1/24

(21) Numéro de dépôt: **80401469.4**

(22) Date de dépôt: **15.10.80**

(54) **Agencement d'un support de colonne de direction et d'un support de pédales sur un véhicule automobile.**

(30) Priorité: **27.11.79 FR 7929136**

(43) Date de publication de la demande:
**03.06.81 Bulletin 81/22**

(45) Mention de la délivrance du brevet:
**13.04.83 Bulletin 83/15**

(84) Etats contractants désignés:
**DE GB IT**

(56) Documents cités:
**DE - A - 2 222 397**
**DE - U - 7 113 766**
**FR - A - 2 255 204**
**FR - A - 2 257 483**
**JP - A - 51 143 225**
**JP - A - 52 018 638**
**JP - A - 53 069 333**
**JP - A - 53 124 834**
**US - A - 3 827 710**
**US - A - 4 102 217**

**La brochure "Peugeot 304" de septembre 1969,
p. 65.**

(73) Titulaire: **AUTOMOBILES PEUGEOT**
**75, avenue de la Grande Armée**
**F-75116 Paris (FR)**

(73) Titulaire: **SOCIETE ANONYME AUTOMOBILES
CITROEN**
**117 à 167, Quai André Citroen**
**F-75747 Paris Cedex 15 (FR)**

(72) Inventeur: **Bary, Serge**
**7 Bis, rue Freville Levingt**
**F-92310 Sevres (FR)**

(74) Mandataire: **Moncheny, Michel et al,**
**c/o Cabinet Lavoix 2 Place d'Estienne d'Orves**
**F-75441 Paris Cedex 09 (FR)**

Courier Press, Leamington Spa, England.

EP 0 029 757 B1

# Agencement d'un support de colonne de direction et d'un support de pédales sur un véhicule automobile

La présente invention se rapporte à l'agencement, dans un véhicule automobile, d'un support de colonne de direction et d'un support de pédales.

La colonne de direction et les pédales étant nécessairement placées face au conducteur d'un véhicule, leurs supports respectifs se trouvent au droit d'un même plan vertical, longitudinal par rapport au véhicule.

Le support de colonne est habituellement fixé sous un caisson transversal d'auvent, tandis que le support de pédales est fixé sur un tablier qui forme séparation entre l'habitacle et le compartiment du moteur. De plus, pour assurer une bonne résistance de l'ensemble, il est courant de réunir les deux supports entre eux par une liaison rigide.

Or, on trouve fréquemment dans le compartiment moteur des organes mécaniques, tels que le maître cylindre et l'assistance de freinage, qui sont portés par le support de pédales et qui, en cas de choc par l'avant, tendent à repousser le support de pédales vers l'intérieur de l'habitacle (voir la brochure "Peugeot 304" de septembre 1969, page 65). Ce déplacement est transmis au support de colonne de direction et, par conséquent, à l'ensemble colonne-volant, ce qui peut occasionner des lésions particulièrement graves pour le conducteur.

Le but de l'invention est de remédier à cet inconvénient.

L'invention concerne donc l'agencement d'un support de colonne de direction et d'un support de pédales sur un véhicule automobile, le support de colonne étant fixé sous un caisson transversal d'auvent, le support de pédales étant fixé sur un tablier et les deux supports étant reliés entre eux (selon la brochure "Peugeot 304" de septembre 1969, page 65).

Cet agencement est caractérisé en ce que les parties constitutives du support de pédales sont décalées transversalement et longitudinalement par rapport au support de colonne, la liaison entre les deux supports étant réalisée par un élément escamotable sous l'action d'un effort prédéterminé.

Deux exemples de réalisation font l'objet de la description qui suit, en référence aux dessins joints dans lesquels:

— la Fig. 1 est une vue latérale d'un agencement selon l'invention;

— la Fig. 2 est une coupe suivant la ligne 2—2 de la Fig. 1;

— la Fig. 3 est une vue identique à celle de la Fig. 2, pour une variante de réalisation.

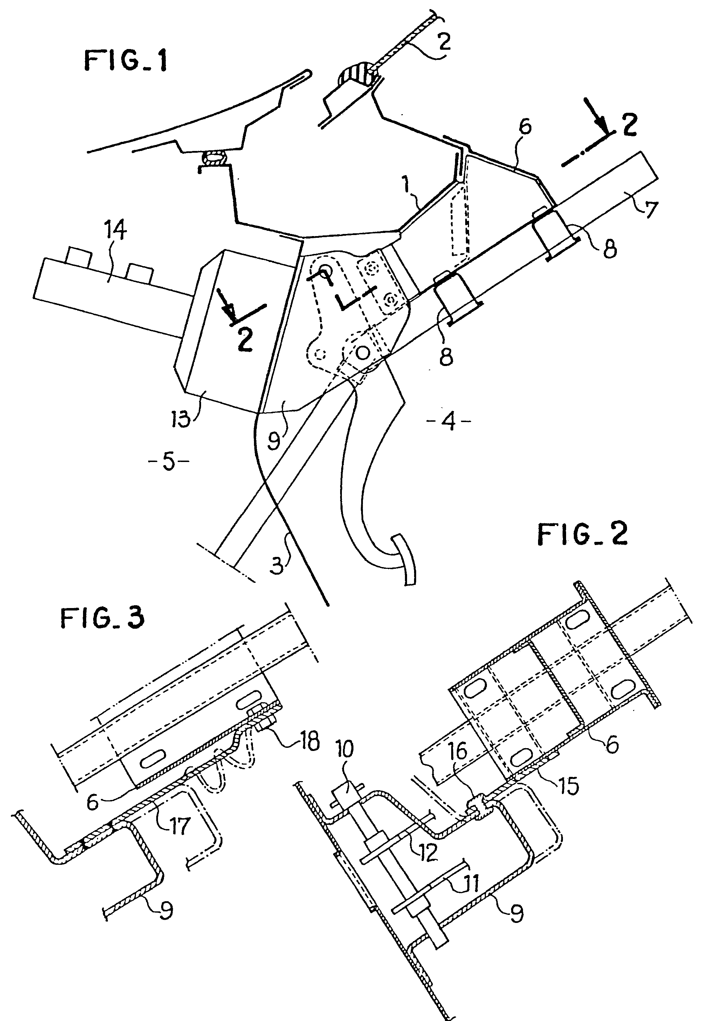

On a représenté, sur la Fig. 1, un caisson d'auvent 1, disposé transversalement entre un parebrise 2 et un tablier 3. Ce dernier constitue une séparation entre un habitacle 4 et un compartiment moteur 5.

Sous le caisson d'auvent 1 est fixé un support 6 portant une colonne de direction 7 au moyen de colliers 8. Sur le tablier 3, du côté de l'habitacle 4, est fixé un support 9 portant un axe 10 sur lequel sont articulées des pédales d'embrayage 11 et de frein 12.

Le support 9 de pédales port également, de façon connue, un amplificateur 13 de force de freinage et un maître cylindre de frein 14 disposés dans le compartiment moteur 5.

Comme on le voit sur la Fig. 2, le support 9 de pédales et le support 6 de colonne sont reliés par une plaque rigide 15. Cette plaque 15 est, par exemple, soudée sur le support 6 et fixée sur le support 9 par des organes de fixation tels que des rivets 16 présentant une résistance limitée au cisaillement. (Cette plaque 15 pourrait naturellement être soudée sur le support 9 et fixée par des rivets sur le support 6).

La liaison entre la plaque 15 et le support 9 est réalisée sur une partie de ce dernier qui se trouve décalée transversalement par rapport au support 6 de colonne.

Grâce à cette disposition, si le partie avant du véhicule se trouve écrasée au cours d'un choc et que des organes mécaniques situés dans le compartiment moteur repoussent, par l'intermédiaire du maître cylindre 14, le support 9 de pédales, il se produit une rupture des rivets 16 et le support 9 se déplace sans repousser le support 6 de colonne, donc sans qu'il y ait recul du volant de direction.

Dans la variante représentée à la Fig. 3, l'élément de liaison entre les supports 6 et 9 est constitué par une plaque 17 soudée sur le support 9 et fixée par des boulons 18 sur le support 6. Dans cet exemple, c'est la déformation de la plaque 17 elle-même, sous l'action d'un effort prédéterminé, qui permet le déplacement du support 9 vers l'intérieur de l'habitacle 4, sans entraînement du support 6, donc sans recul du volant de direction.

## Revendications

1. Agencement d'un support (6) de colonne de direction et d'un support de pédales (9) sur un véhicule automobile, le support de colonne (6) étant fixé sous un caisson transversal d'auvent (1), le support de pédales (9) étant fixé sur un tablier (3) et les deux supports étant reliés entre eux, caractérisé en ce que les parties constitutives du support de pédales (9) sont décalées transversalement et longitudinalement par rapport au support de colonne (6) la liaison entre les deux supports étant réalisée par un élément (15, 17) escamotable sous l'action d'un effort prédéterminé.

2. Agencement suivant la revendication 1, caractérisé en ce que ledit élément escamotable de liaison entre les deux supports (6, 9) est constitué par une plaque rigide (15) fixée sur l'un au moins desdits supports (9) par des organes de fixation (16) présentant une résistance au cisaillement limitée.

3. Agencement suivant la revendication 2, caractérisé en ce que lesdits éléments de fixation à résistance au cisaillement limitée son constitués par des rivets.

4. Agencement suivant la revendication 1, caractérisé en ce que ledit élément escamotable de liaison entre les deux supports (6, 9) est constitué par une plaque (17) déformable sous l'action d'un effort prédéterminé.

## Claims

1. A support arrangement (6) for a steering column and a pedal support (9) for an automobile, the support column (6) being afixed below a forward transversal caisson (1), the pedal support (9) being afixed on a apron (3) and the two supports being interconnected, characterized in that the parts making up the pedal support (9) are transversely and longitudinally displaced relative to the support column (6), the connection between the two supports being effected by an element (15, 17) retractable at a predetermined force.

2. An arrangement according to claim 1, characterized in that the said retractable connection element between the two supports (6, 9) is constituted by a rigid plate (15) afixed on at least one of said supports (9) by afixing means (16) having a limited resistance to shearing forces.

3. An arrangement according to claim 2, characterized in that said afixing means having limited resistance to shearing forces are constituted by rivets.

4. An arrangement according to claim 1, characterized in that said retractable connection element between the two supports (6, 9) is constituted by a plate (17), deformable under a predetermined force.

## Patentansprüche

1. Anordnung eines Lenksäulenträgers (6) und eines Pedalträgers (9) an einem Kraftfahrzeug, wobei der Lenksäulenträger (6) unter einem Windlaufkasten (1) befestigt ist, der Pedalträger (9) an einer Stirnwand (3) befestigt ist und die beiden Träger miteinander verbunden sind, dadurch gekennzeichnet, daß die Bestandteile des Pedalträgers (9) gegenüber dem Lenksäulenträger (6) in Quer- und in Längsrichtung versetzt sind, wobei die Verbindung zwischen den beiden Trägern durch ein Element (15, 17) erfolgt, das bei einer gegebenen Kraft eindrückbar ist.

2. Anordnung nach Anspruch 1, dadurch gekennzeichnet, daß das eindrückbare Verbindungselement zwischen den beiden Trägern (6, 9) aus einer starren Platte (15) besteht, die an wenigstens einem (9) der Träger durch Befestigungsorgane (16) mit einem begrenzten Abscherwiderstand befestigt ist.

3. Anordnung nach Anspruch 2, dadurch gekennzeichnet, daß die Befestigungselemente mit begrenztem Abscherwiderstand aus Nieten bestehen.

4. Anordnung nach Anspruch 1, dadurch gekennzeichnet, daß das eindrückbare Verbindungselement zwischen den beiden Trägern (6, 9) aus einer Platte (17) besteht, die unter der Wirkung einer gegebenen Kraft verformbar ist.

FIG_1

FIG_2

FIG_3